# EUROPÄISCHE PATENTSCHRIFT

(11) **EP 1 606 594 B1**
(45) Veröffentlichungstag und Bekanntmachung des Hinweises auf die Patenterteilung: **14.11.2007**
(21) Anmeldenummer: 04722278.1
(22) Anmeldetag: 22.03.2004
(51) Int. Cl.: G01F 1/58

(54) **MAGNETISCH-INDUKTIVER DURCHFLUSSMESSER**
Electromagnetic flow meter
Débitmètre électromagnétique

(30) Priorität: 22.03.2003 DE 10312824
(43) Veröffentlichungstag der Anmeldung: 21.12.2005
(73) Patentinhaber: SIEMENS AKTIENGESELLSCHAFT, 80333 München (DE)
(72) Erfinder: NIELSEN, S ren, S nderborg, 6400 (DK)
(86) Internationale Anmeldenummer: PCT/EP2004/003019
(87) Internationale Veröffentlichungsnummer: WO 2004/083786

(56) Entgegenhaltungen:
- US-A- 4 297 897
- US-A- 5 400 659
- PATENT ABSTRACTS OF JAPAN Bd. 0185, Nr. 67 (P-1820), 28. Oktober 1994 (1994-10-28) & JP 6 207841 A (YAMATAKE HONEYWELL CO LTD), 26. Juli 1994 (1994-07-26)
- PATENT ABSTRACTS OF JAPAN Bd. 1997, Nr. 02, 28. Februar 1997 (1997-02-28) & JP 8 254450 A (YAMATAKE HONEYWELL CO LTD), 1. Oktober 1996 (1996-10-01)
- PATENT ABSTRACTS OF JAPAN Bd. 015, Nr. 153 (P-1191), 17. April 1991 (1991-04-17) -& JP 03 024423 A (TOSHIBA CORP), 1. Februar 1991 (1991-02-01)

## Beschreibung

Die Erfindung betrifft einen magnetisch-induktiven Durchflussmesser mit einer Messstrecke, die von einer Wand umgeben ist, einer Magnetfelderzeugungseinrichtung und einer Elektrodenanordnung, die mindestens eine Elektrode auf der Innenseite der Wand und einen Elektrodenanschluss auf der Außenseite der Wand aufweist.

Ein derartiger Durchflussmesser ist beispielsweise aus US 4 297 897 bekannt. Die Messstrecke wird üblicherweise durch ein Rohr gebildet. Auf der Außenseite des Rohres sind zwei Magnetspulen angeordnet, die ein Magnetfeld senkrecht zur Durchflussrichtung einer Flüssigkeit durch das Rohr erzeugen. Um etwa 90° zu den Magnetspulen versetzt sind Elektroden angeordnet, die Kontakt mit der Flüssigkeit haben. Eine Spannung zwischen den beiden Elektroden ist abhängig von der Stärke des Magnetfelds einerseits und von der Geschwindigkeit des durchströmenden Fluids.

Im bekannten Fall ist die Elektrode in ein Innengewinde einer Fassung eingeschraubt, die die Wand des Rohres durchragt. Die Fassung ihrerseits weist ein Außengewinde auf, auf das eine Mutter aufgeschraubt ist. Die Fassung weist auf der Innenseite der Wand einen vergrößerten Kopf auf, so dass die Wand zwischen dem Kopf und der Mutter unter Zwischenlage einer Dichtung und einer Feder eingespannt wird.

Eine weitere Elektrodenanordnung für einen magnetisch-induktiven Durchflussmesser ist aus EP 1 217 338 A2 bekannt. Hier weist die Elektrode einen Schaft auf, der durch die Wand des Messrohres geführt ist. Der Schaft weist ein Außengewinde auf, auf das eine Mutter aufgeschraubt ist, um die Elektrode mit der Wand zu verspannen.

Bei einer derartigen Ausgestaltung ist der Montageaufwand relativ hoch. Man benötigt mindestens eine, in der Regel aber mehrere Schraubverbindungen, um die Elektrode in der Wand der Messstrecke zu fixieren und um eine elektrische Leitung anzuschließen.

Aus der JP 03-024423 A ist eine Elektrodenanordnung bekannt, bei welcher eine Elektrodenhalterung und eine Elektrode von außen in ein Loch in einer Messrohrwand eingeführt sind. Die Elektrodenhalterung ist im Wesentlichen zylinderförmig ausgebildet und so weit in das Loch eingeschoben, dass sich die Oberfläche des Bodenteils der Elektrodenhalterung der Innenwand des Messrohrs flächig anpasst. In dem Loch wird die Elektrodenhalterung durch Haftreibung gehalten. Die Elektrode weist einen Elektrodenschaft auf, der an seinem einen Ende mit einer kugelförmigen Verdickung versehen ist. Sie ist soweit in die zylinderförmige Elektodenhalterung eingeschoben, dass die kugelförmige Verdickung in einem Bereich mit entsprechend erweitertem Innendurchmesser liegt, und wird in ihrer Position ebenfalls im Wesentlichen durch Haftreibung gehalten.

Der Erfindung liegt die Aufgabe zugrunde, die Montage zu vereinfachen.

Diese Aufgabe wird bei einem Durchflussmesser der eingangs genannten Art dadurch gelöst, dass der Elektrodenanschluss über eine Steckverbindung mit der von der entgegengesetzten Seite der Wand zugeführten Elektrode verbunden ist und dass die Elektrode einen Teil einer Widerhakenverbindung aufweist, mit der sie in ihrer Position gehalten ist.

Die Erfindung hat den Vorteil, dass die Kräfte vergrößert werden, mit denen die Elektrode in der Wand gehalten ist, über einen reinen Reibschluss zwischen der Elektrode und dem Elektrodenanschluss hinaus. Eine Widerhakenverbindung weist eine Kante am Ende einer konischen Fläche auf, die sich an einem Gegenstück verhaken kann. Beispielsweise kann sich die Kante in das Material eindrücken, das die Wand bildet.

Diese Ausgestaltung hat mehrere Vorteile. Die Montage wird wesentlich erleichtert. Man muss keine Schraubverbindungen mehr zwischen dem Elektrodenanschluss und der Elektrode vorsehen. Damit wird die Montage der Elektrodenanordnung weitgehend unabhängig von der Person, die die Montage vornimmt. Es können beispielsweise keine zu großen Einspannmomente auftreten. Die Montageergebnisse sind dadurch besser reproduzierbar.

Vorzugsweise ist die Steckverbindung innerhalb der Wand ausgebildet. Dies hat zum einen den Vorteil, dass die Elektrode an sich relativ klein gehalten werden kann. Sie muss die Wand nicht mehr durchragen, sondern kann mit einem Fortsatz in der Wand enden. Insbesondere dann, wenn für die Messung in einem besonderen Fluid spezielle und damit teure Materialien verwendet werden müssen, senkt diese Ausbildung die Kosten, weil eben nur wenig von dem teuren Material benötigt wird. Der Elektrodenanschluss kann aus einem anderen Material gebildet werden, weil er nicht mehr mit dem Fluid in Kontakt steht. Darüber hinaus wird die Steckverbindung geschützt. Sowohl die Elektrode als auch der Elektrodenanschluss ragen in die Wand hinein, sind also zumindest teilweise geführt. Die Verbindung wird dadurch stabiler.

Bevorzugterweise ist der Elektrodenanschluss zumindest außerhalb der Wand von einer metallischen Abschirmung umgeben. Der Elektrodenanschluss weist also sozusagen ein abschirmendes Gehäuse auf, das einen Faraday'schen Käfig bildet. Dadurch werden Störeinstrahlungen von elektrischen oder magnetischen Feldern wirksam unterbunden. Dies ist besonders bei einem Durchflussmesser von Vorteil, bei dem die Signalspannungen, die eine Aussage über die Geschwindigkeit des durchströmenden Fluids geben, relativ klein sind. In eine derartige metallische Abschirmung kann man beispielsweise ein abgeschirmtes Kabel einführen, das dann innerhalb der metallischen Abschirmung mit dem Elektrodenanschluss verbunden ist. Diese Verbindung kann bereits vorgefertigt werden. Die Endmontage der Elektrode in der Wand wird dann einfach dadurch vorgenommen, dass die Elektrode von einer Seite in die Wand eingesetzt wird und der Elektrodenanschluss mit seinem abschirmenden Gehäuse von der anderen Seite her eingesetzt wird. Wenn die Steckverbindung zwischen der Elektrode und dem Elektrodenanschluss hergestellt ist, dann ist die Elektrode sicher in der Wand gehalten und der Elektrodenanschluss ist abgeschirmt.

Vorzugsweise ist die Widerhakenverbindung zwischen der Elektrode und dem Elektrodenanschluss ausgebildet. Damit wird die Wand durch die Verbindung nicht belastet. Bei einer Funktionsstörung kann man einfach die Verbindung trennen und eine neue Paarung von Elektrode und Elektrodenanschluss verwenden, die dann nach wie vor sicher eine Widerhakenverbindung bilden kann, weil entsprechende Abdrücke in der Wand des Gehäuses fehlen.

Hierbei ist besonders bevorzugt, dass die Widerhakenverbindung als Schnappverbindung ausgebildet ist, bei der ein federnd ausgebildetes erstes Verbindungselement hinter ein zweites Verbindungselement einrastet. Eine derartige Schnappverbindung erlaubt einen Formschluss, der weitaus höhere Haltekräfte ermöglicht als ein reiner Reibschluss, auch wenn dieser durch eine scharfe Kante verstärkt wird.

Vorzugsweise ist das erste Verbindungselement als Ring mit Unterbrechungen ausgebildet, der von einer Ringfeder umgeben ist. Der Ring weist dabei einen nach innen ragenden umlaufenden Flansch oder jedenfalls radial nach innen ragende Vorsprünge, die auf ihrer Oberseite abgeschrägt sein können, auf. Die Ringfeder, beispielsweise ein elastischer Ring, erlaubt es, die einzelnen Ringabschnitte radial nach außen zu verformen, wenn die Verbindung hergestellt wird. Durch die Ringfeder werden die Abschnitte dann aber wieder zurückgedrückt, wenn das zweite Verbindungselement eingerastet ist.

Vorzugsweise ist das zweite Verbindungselement an einer Bohrungswand abgestützt. In diesem Fall ist es sinnvoll, wenn das erste Verbindungselement radial nach innen federn kann. Wenn das zweite Verbindungselement an der Bohrungswand abgestützt ist, dann ergibt sich dadurch eine weitere Haltemöglichkeit, so dass der Sitz der Elektrodenanordnung in der Wand weiter verbessert wird.

Hierbei ist bevorzugt, dass das zweite Verbindungselement an der Elektrode ausgebildet ist. Beim Herstellen der Schnappverbindung wird die Elektrode nicht verformt. Es sind also später keine Funktionsstörungen zu befürchten, die auf möglicherweise ungewollten Verformungen der Elektrode beruhen.

Vorzugsweise wirkt eine Federanordnung auf den Elektrodenanschluss, die den Elektrodenanschluss in einer Richtung von der Elektrode weg belastet. Damit wird die Elektrode sicher gegen die Innenseite der Wand gezogen. Wenn man eine Dichtung zwischen der Elektrode und der Wand vorsieht, dann wirken die Kräfte der Federanordnung in Richtung auf eine Kompression dieser Dichtung, so dass die Dichtigkeit verbessert wird. Insbesondere im Zusammenhang mit einer Schnappverbindung werden die Haltekräfte bei der Verbindung zwischen der Elektrode und dem Elektrodenanschluss vergrößert. Eine unter Spannung stehende Schnappverbindung lässt sich praktisch nicht versehentlich lösen.

Hierbei ist besonders bevorzugt, dass die Federanordnung auf die Abschirmung wirkt und sie gegen die Außenseite der Wand drückt. Damit bekommt man eine praktisch unterbrechungsfreie Abschirmung. Die Außenseite der Wand ist vielfach mit einer Abschirmfolie versehen, beispielsweise einer Kupferfolie. Durch die Federanordnung wird also eine ausreichende Kontaktkraft zwischen der Abschirmung und der Abschirmfolie hergestellt.

Hierbei ist bevorzugt, dass die Abschirmung mit einer Ringfläche außerhalb der Federanordnung auf der Außenseite der Wand aufsteht. Die Ringfläche ist relativ schmal und damit klein. Damit lässt sich ein relativ großer Pressdruck zwischen der Abschirmung und der Folie auf der Außenseite der Wand erreichen.

Auch ist von Vorteil, wenn der Elektrodenanschluss einstückig und direkt mit einem Signalleiter verbunden ist. Diese Verbindung kann entweder dadurch gebildet sein, dass der Signalleiter sich im Elektrodenanschluss fortsetzt, oder dadurch, dass er mit dem Elektrodenanschluss verlötet, verschweißt, verklebt oder ähnliches ist. Nachträgliche Befestigungsschritte können entfallen. Die elektrische Kontaktierung wird verbessert.

Die Erfindung wird im Folgenden anhand von bevorzugten Ausführungsbeispielen in Verbindung mit der Zeichnung näher beschrieben. Hierin zeigen:
- Fig. 1: eine schematische Darstellung eines magnetisch-induktiven Durchflussmessers,
- Fig. 2: eine erste Ausführungsform einer Elektrodenanordnung,
- Fig. 3: eine zweite Ausführungsform einer Elektrodenanordnung,
- Fig. 4: eine dritte Ausführungsform einer Elektrodenanordnung und
- Fig. 5: eine vierte Ausführungsform einer Elektrodenanordnung.

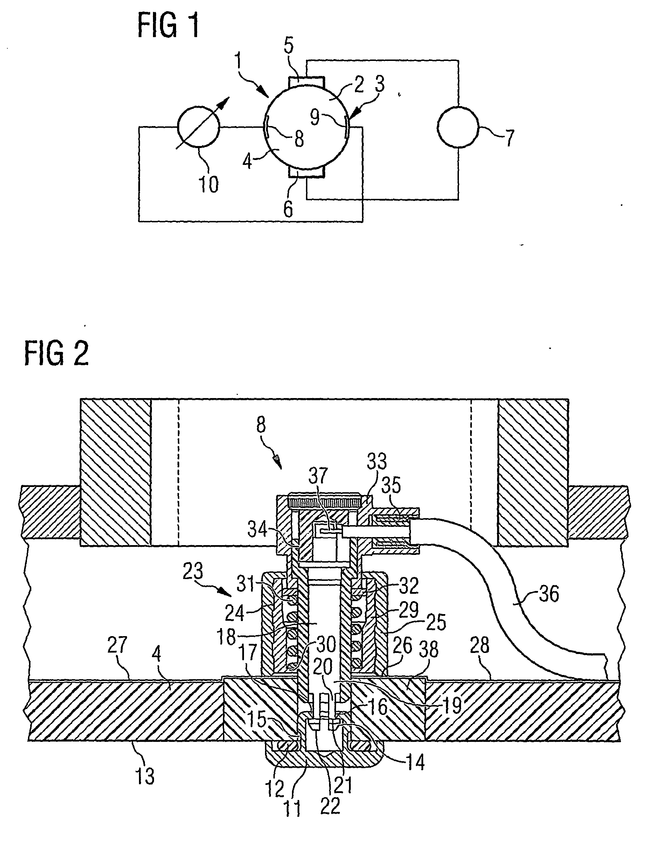

Fig. 1 zeigt einen magnetisch-induktiven Durchflussmesser 1 mit einer Messstrecke 2, die senkrecht zur Zeichenebene von einem Fluid durchströmt werden kann. Die Messstrecke ist im Innern eines Rohres 3 mit einer Wand 4 ausgebildet. Zwei Spulen 5, 6 sind mit einer Versorgungseinrichtung 7 verbunden. Wenn die Spulen 5, 6 mit Strom versorgt werden, erzeugen sie ein Magnetfeld, das senkrecht zur Durchströmrichtung gerichtet ist. Zwei Elektrodenanordnungen 8, 9 sind mit einer Auswerteeinrichtung 10 verbunden. Wenn die Spulen 5, 6 ein Magnetfeld erzeugen und ein Fluid senkrecht zur Zeichenebene durch das Rohr 3 strömt, dann entsteht eine Spannung zwischen den Elektroden 8, 9, die von der Auswerteeinrichtung 10 ausgewertet werden kann und eine Aussage über den Massenstrom des Fluids ermöglicht.

Fig. 2 zeigt nun eine derartige Elektrodenanordnung 8 in vergrößerter Darstellung.

Die Elektrodenanordnung 8 weist eine Elektrode 11 auf, die unter Zwischenlage einer Dichtung 12 an der Innenseite 13 der Wand 4 anliegt. Die Elektrode 11 weist einen Fortsatz 14 auf, der in eine Öffnung 15 in der Wand 4 gesteckt ist. Der Fortsatz 14 liegt mit seiner radialen Außenseite an der Wand der Bohrung 15 an. Er ist an seinem Ende radial nach innen umgeformt, so dass ein umlaufender Vorsprung 16 gebildet ist, der eine abgeschrägte Oberseite 17 aufweist. Der Vorsprung 16 bildet also einen Innenkonus.

Ein Elektrodenanschluss 18 ragt mit seinem unteren Ende 19 ebenfalls in die Bohrung 15. Der Elektrodenanschluss 18 weist an seinem Ende federnde Finger 20 auf, die in radial auswärts gerichteten Vorsprüngen 21 enden. Die Vorsprünge 21 weisen eine abgeschrägte Stirnseite 22 auf.

Die Vorsprünge 21 des Elektrodenanschlusses 18 hintergreifen den Vorsprung 16 des Fortsatzes 14 der Elektrode 11. Somit ist eine Schnappverbindung zwischen der Elektrode 11 und dem Elektrodenanschluss 18 gebildet.

Der Elektrodenanschluss 18 weist eine Abschirmung 23 mit einem Gehäuse 24 auf. Das Gehäuse 24 weist einen Außenring 25 auf, der mit seiner Stirnseite 26 auf der Außenseite 27 der Wand 4 aufsteht. Auf der Außenseite 27 ist eine Kupferfolie 28 aufkaschiert. Durch die Berührung zwischen dem Außenring 25 mit der Kupferfolie 28 wird eine elektrisch leitende Verbindung zwischen dem Gehäuse 24 und der Kupferfolie 28 geschaffen.

Das Gehäuse 24 weist auch einen Innenring 29 auf, der in den Außenring 25 eingepresst ist. Der Innenring 29 weist an seinem der Wand 4 benachbarten Ende einen nach innen ragenden Vorsprung 30 auf, an dem sich eine Feder 31 abstützt. Die Feder 31 wirkt über eine Scheibe 32 auf einen Kopf 33, der wiederum auf das obere Ende des Elektrodenanschlusses 18 wirkt und damit den Elektrodenanschluss 18 in eine Richtung mit Kraft beaufschlagt, die von der Elektrode 11 weg gerichtet ist. Zwischen dem Kopf 33 und dem Elektrodenanschluss 18 ist eine Isolierung 34 angeordnet, die sich bis in die Bohrung 15 erstreckt.

Beispielhaft dargestellt ist, dass der Kopf 33 im Bereich der Scheibe 32 einen nach innen ragenden umlaufenden Vorsprung aufweist, der auf eine Stufe an der Isolierung 34 wirkt. Die Isolierung 34 weist eine Durchmesservergrößerung auf, auf der eine entsprechende Durchmesservergrößerung des Elektrodenanschlusses anliegt. Im Grunde müssen alle Berührungsflächen nur auf Druck belastbar sein. Es liegt aber auf der Hand, dass andere Ausgestaltungen möglich sind.

Der Kopf 33 ist mit einer Abschirmung 35 eines abgeschirmten Kabels 36 verbunden. Das abgeschirmte Kabel 36 weist eine Seele 37 auf, die mit dem Elektrodenanschluss 18 verbunden ist, beispielsweise durch Löten.

Das Gehäuse 24 umschließt an seinem oberen Ende den Kopf 33 so dicht wie möglich. Allerdings wird eine teleskopierende Bewegung des Kopfes 33 gegen die Kraft der Feder 31 im Gehäuse 24 zugelassen.

Der Elektrodenanschluss 18 mit dem Gehäuse 24, der Feder 31, dem Kopf 33 und dem Kabel 36 kann vormontiert werden, beispielsweise durch Handhabungsautomaten.

Zur Montage der Elektrode 11 wird die Elektrode 11 von der Innenseite 13 her in die Bohrung 15 der Wand 4 gesteckt. Da die Elektrode 11 mit der Außenseite des Fortsatzes 14 an der Wand der Bohrung 15 anliegt, entsteht hier ein leichter Reibschluss, der dafür sorgt, dass die Elektrode 11 nicht aus der Bohrung 15 herausfallen kann.

Von der entgegengesetzten Seite wird der Elektrodenanschluss 18 in die Bohrung eingeführt. Dabei wird der Kopf 33 in Richtung auf die Elektrode 11 eingedrückt. Wenn dann die Stirnseite 22 der Vorsprünge 21 an den Fingern 20 zur Anlage an die Oberseite 17 des Fortsatzes 14 kommen, dann werden die Finger 20 radial einwärts eingedrückt und zwar so, dass die Vorsprünge 21 am Ende der Finger 20 den Vorsprung 16 am Fortsatz 14 passieren können. Sobald sie an dem Fortsatz 14 vorbei bewegt worden sind, federn sie wieder radial nach außen und haken sich hinter dem Vorsprung 16 des Fortsatzes 14 fest. Wenn dann der Kopf 33 nicht weiter gegen die Kraft der Feder 31 in Richtung auf die Elektrode 11 belastet wird, dann kann die Feder 31 expandieren und drückt den Elektrodenanschluss 18 von der Elektrode 11 weg, so dass sich die Vorsprünge 21 an den Fingern 20 hinter dem Vorsprung 16 am Fortsatz 14 verhaken. Dadurch entsteht zunächst einmal eine formschlüssige Verbindung zwischen der Elektrode 11 und dem Elektrodenanschluss 18. In dieser Verbindung liegen die Vorsprünge 21 mit einer Kraft am Vorsprung 16 an, die ausreicht, einen elektrischen Kontakt mit der notwendigen Zuverlässigkeit herzustellen.

Gleichzeitig wird die Dichtung 12, wie dargestellt, komprimiert, so dass die Elektrode 11 auch fluiddicht in der Wand 4 gehalten ist.

Die Verbindung zwischen der Elektrode 11 und dem Elektrodenanschluss 18 erfolgt inmitten der Wand 4. Die Wand 4 kann hierzu einen Abschnitt 38 aufweisen, der eine geringfügig größere Dicke hat. Der Abschnitt 38 kann an der Außenseite 27 eben ausgebildet sein, so dass die Stirnseite 26 des Außenrings 25 ebenfalls eben ausgebildet sein kann. Man muss daher keine bestimmte Orientierung beachten, wenn der Elektrodenanschluss 18 in die Elektrode 11 eingesteckt wird.

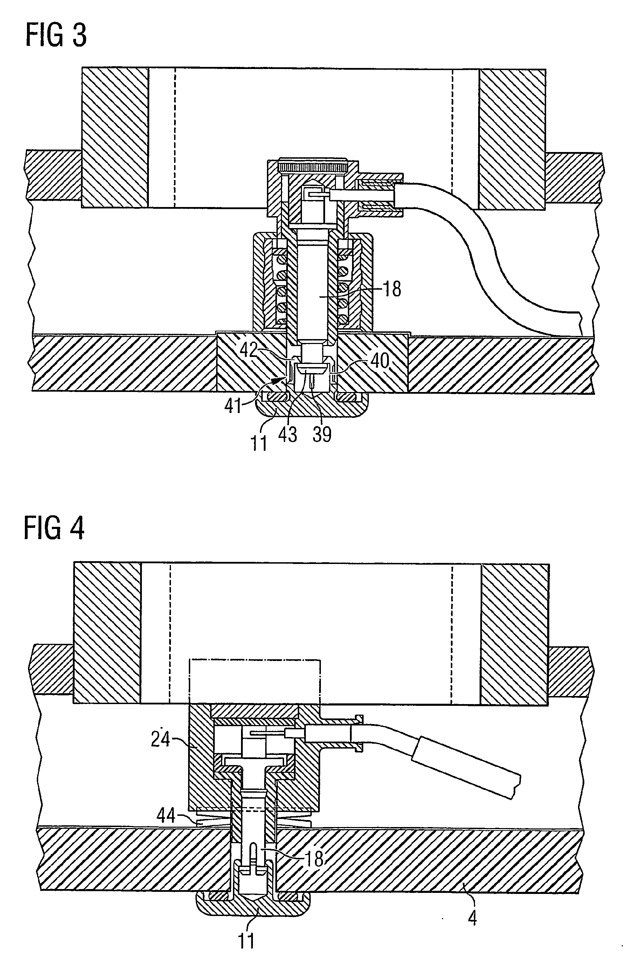

Die Ausführungsform der Fig. 3 entspricht im Wesentlichen der Ausführungsform der Fig. 2. Gleiche Teile sind daher mit gleichen Bezugszeichen versehen. Im Unterschied zur Ausbildung nach Fig. 2 ist bei der Ausbildung nach Fig. 3 die Elektrode mit einem Fortsatz 14 versehen, der Schlitze 39 aufweist, so dass Beine 40 gebildet werden, die nach außen federn können. Diese Beine 40 werden durch eine Ringfeder 41, beispielsweise einen elastischen Ring, radial nach innen gehalten.

Die Beine 40 weisen am Ende einen abgeschrägten Kopf 42 auf, der auch radial über die Beine 40 nach innen vorsteht. Ein Gegenstück 43 am Elektrodenanschluss 18 kann sich dann hinter den Köpfen 42 an den Beinen 40 verhaken. Auch auf diese Weise lässt sich eine Schnappverbindung herstellen.

In Fig. 4 ist eine Ausgestaltung dargestellt, bei der eine Schnappverbindung zwischen der Elektrode 11 und dem Elektrodenanschluss 18 praktisch auf gleiche Weise wie in Fig. 2 hergestellt worden ist. Hier ist eine Feder 44 allerdings zwischen dem Gehäuse 24 und der Wand 4 angeordnet. Es handelt sich dabei um eine Tellerfeder, so dass auch in dem Bereich zwischen dem Gehäuse 24 und der Wand 4 eine elektrische Abschirmung gegeben ist.

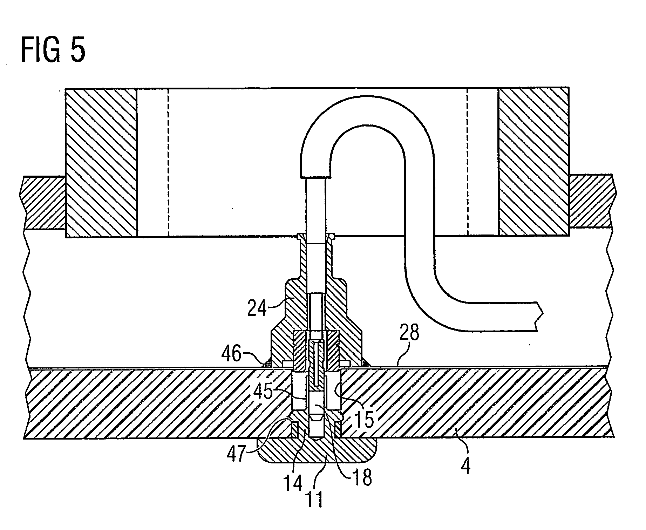

Bei der Ausgestaltung nach Fig. 5 gibt es zwischen der Elektrode 11 und dem Elektrodenanschluss 18 eine reine Steckverbindung. Die Elektrode 11 kann hierzu eine Hülsenverlängerung 45 aufweisen, in die der Elektrodenanschluss 18 eingesteckt ist, so dass sich eine relativ lange Kontaktfläche ergibt.

Das Gehäuse 24 ist mit der Kupferfolie 28 über eine Lötverbindung 46 verbunden.

Der Fortsatz 14 weist einen radial nach außen ragenden Vorsprung 47 auf, dessen größter Außendurchmesser geringfügig größer als der Innendurchmesser der Bohrung 15 ist. Wenn die Elektrode 11 in die Bohrung 15 eingedrückt wird, dann "beißt" sich der Vorsprung 47 in der Wand 4 fest. Bei dieser Ausgestaltung wird die Elektrode durch den Vorsprung 47 in der Wand 4 gehalten. Das Gehäuse 24 wird über die Lötverbindung 46 positioniert. Aus diesem Grunde reicht der Reibschluss der Steckverbindung zwischen dem Elektrodenanschluss 18 und der Hülsenverlängerung 45 aus.

## Patentansprüche

1. Magnetisch-induktiver Durchflussmesser mit einer Messstrecke, die von einer Wand umgeben ist, einer Magnetfelderzeugungseinrichtung und einer Elektrodenanordnung, die mindestens eine Elektrode auf der Innenseite der Wand und einen Elektrodenanschluss auf der Außenseite der Wand aufweist, wobei der Elektrodenanschluss (18) die Elektrode (11) an der Wand (4) fixiert, **dadurch gekennzeichnet, dass** der Elektrodenanschluss (18) über eine Steckverbindung mit der von der entgegengesetzten Seite der Wand (4) zugeführten Elektrode (11) verbunden ist und dass die Elektrode (11) einen Teil (16, 42, 47) einer Widerhakenverbindung aufweist, mit der sie in ihrer Position gehalten ist.

2. Durchflussmesser nach Anspruch 1, **dadurch gekennzeichnet, dass** die Steckverbindung innerhalb der Wand (4) ausgebildet ist.

3. Durchflussmesser nach Anspruch 1 oder 2, **dadurch gekennzeichnet, dass** der Elektrodenanschluss (18) zumindest außerhalb der Wand (4) von einer metallischen Abschirmung (23) umgeben ist.

4. Durchflussmesser nach einem der Ansprüche 1 bis 3, **dadurch gekennzeichnet, dass** die Widerhakenverbindung zwischen der Elektrode (11) und dem Elektrodenanschluss (18) ausgebildet ist.

5. Durchflussmesser nach Anspruch 4, **dadurch gekennzeichnet, dass** die Widerhakenverbindung als Schnappverbindung (16, 21; 22, 43) ausgebildet ist, bei der ein federnd ausgebildetes erstes Verbindungselement (21, 42) hinter einem zweiten Verbindungselement (16, 43) einrastet.

6. Durchflussmesser nach Anspruch 5, **dadurch gekennzeichnet, dass** das erste Verbindungselement (42) als Ring mit Unterbrechungen ausgebildet ist, der von einer Ringfeder (41) umgeben ist.

7. Durchflussmesser nach Anspruch 5, **dadurch gekennzeichnet, dass** das zweite Verbindungselement (16) an einer Bohrungswand abgestützt ist.

8. Durchflussmesser nach Anspruch 7, **dadurch gekennzeichnet, dass** das zweite Verbindungselement (16) an der Elektrode (11) ausgebildet ist.

9. Durchflussmesser nach einem der Ansprüche 4 bis 8, **dadurch gekennzeichnet, dass** eine Federanordnung (31, 44) auf den Elektrodenanschluss (18) wirkt, die den Elektrodenanschluss (18) in eine Richtung von der Elektrode (11) weg belastet.

10. Durchflussmesser nach Anspruch 9, **dadurch gekennzeichnet, dass** die Federanordnung (31) auf die Abschirmung (23) wirkt und sie gegen die Außenseite (27) der Wand (4) drückt.

11. Durchflussmesser nach Anspruch 9 oder 10, **dadurch gekennzeichnet, dass** die Abschirmung (23) mit einer Ringfläche (26) außerhalb der Federanordnung (31) auf der Außenseite (27) der Wand (4) aufsteht.

12. Durchflussmesser nach einem der Ansprüche 1 bis 11, **dadurch gekennzeichnet, dass** der Elektrodenanschluss einstückig und direkt mit einem Signalleiter verbunden ist.

## Claims

1. Magnetically inductive flowmeter having a measurement path, which is surrounded by a wall, a magnetic field generating device and an electrode arrangement, which has at least one electrode on the inner side of the wall and an electrode connection on the outer side of the wall, the electrode connection (18) fixing the electrode (11) to the wall (4), **characterized in that** the electrode connection (18) is connected to the electrode (11), which is supplied from the opposite side of the wall (4), via a plug-in connection, and **in that** the electrode (11) has a part (16, 42, 47) of a barb-type connection, with which it is held in its position.

2. Flowmeter according to Claim 1, **characterized in that** the plug-in connection is formed within the wall (4).

3. Flowmeter according to Claim 1 or 2, **characterized in that** the electrode connection (18) is surrounded by a metallic shield (23) at least outside the wall (4).

4. Flowmeter according to one of Claims 1 to 3, **characterized in that** the barb-type connection is formed between the electrode (11) and the electrode connection (18).

5. Flowmeter according to Claim 4, **characterized in that** the barb-type connection is in the form of a snap-action connection (16, 21; 22, 43), in which a resilient first connecting element (21, 42) is latched in behind a second connecting element (16, 43).

6. Flowmeter according to Claim 5, **characterized in that** the first connecting element (42) is in the form of a ring with interruptions, which is surrounded by an annular spring (41).

7. Flowmeter according to Claim 5, **characterized in that** the second connecting element (16) is supported on a wall of a drilled hole.

8. Flowmeter according to Claim 7, **characterized in that** the second connecting element (16) is formed on the electrode (11).

9. Flowmeter according to one of Claims 4 to 8, **characterized in that** a spring arrangement (31, 44) acts on the electrode connection (18) and subjects the electrode connection (18) to a load in a direction away from the electrode (11).

10. Flowmeter according to Claim 9, **characterized in that** the spring arrangement (31) acts on the shield (23) and presses it against the outer side (27) of the wall (4).

11. Flowmeter according to Claim 9 or 10, **characterized in that** the shield (23) stands up on the outer side (27) of the wall (4) with an annular face (26) outside the spring arrangement (31).

12. Flowmeter according to one of Claims 1 to 11, **characterized in that** the electrode connection is connected integrally and directly to a signal conductor.

## Revendications

1. Débitmètre électromagnétique comportant un trajet de mesure entouré d'une paroi, un dispositif générateur de champ magnétique et un système d'électrodes muni d'au moins une électrode sur le côté intérieur de la paroi et d'une borne d'électrode sur le côté extérieur de la paroi, la borne d'électrode (18) immobilisant l'électrode (11) sur la paroi (4),
**caractérisé en ce que**, par l'intermédiaire d'une liaison enfichable, la borne d'électrode (18) est reliée à l'électrode (11) provenant du côté opposé de la paroi (4) et **en ce que** l'électrode (11) comporte une partie (16, 42, 47) d'une liaison en crochet par laquelle elle est maintenue en position.

2. Débitmètre selon la revendication 1, **caractérisé en ce que** la liaison enfichable est formée à l'intérieur de la paroi (4).

3. Débitmètre selon la revendication 1 ou 2, **caractérisé en ce que** la borne d'électrode (18) est entourée d'un blindage (23) métallique au moins à l'extérieur de la paroi (4).

4. Débitmètre selon l'une des revendications 1 à 3, **caractérisé en ce que** la liaison en crochet est formée entre l'électrode (11) et la borne d'électrode (18).

5. Débitmètre selon la revendication 4, **caractérisé en ce que** la liaison en crochet est une liaison à encliquetage (16, 21 ; 22, 43) dans laquelle un premier élément de liaison (21, 42) élastique se bloque derrière un deuxième élément de liaison (16, 43).

6. Débitmètre selon la revendication 5, **caractérisé en ce que** le premier élément de liaison (42) est une bague comportant des interruptions et entourée d'un ressort annulaire (41).

7. Débitmètre selon la revendication 5, **caractérisé en ce que** le deuxième élément de liaison (16) s'appuie sur une paroi de perçage.

8. Débitmètre selon la revendication 7, **caractérisé en ce que** le deuxième élément de liaison (16) est formé sur l'électrode (11).

9. Débitmètre selon l'une des revendications 4 à 8, **caractérisé en ce qu'**un système de ressorts (31, 44) agit sur la borne d'électrode (18) dans une direction qui l'éloigne de l'électrode (11).

10. Débitmètre selon la revendication 9, **caractérisé en ce que** le système de ressorts (31) agit sur le blindage (23) et le presse contre le côté extérieur (27) de la paroi (4).

11. Débitmètre selon la revendication 9 ou 10, **caractérisé en ce que**, par une surface annulaire (26) située à l'extérieur du système de ressorts (31), le blindage (23) repose sur le côté extérieur (27) de la paroi (4).

12. Débitmètre selon l'une des revendications 1 à 11, **caractérisé en ce que** la borne d'électrode est relié directement et d'une seule pièce à un conducteur de signaux.
